(19) Europäisches Patentamt / European Patent Office / Office européen des brevets

(11) **EP 2 457 075 B1**

(12) **EUROPÄISCHE PATENTSCHRIFT**

(45) Veröffentlichungstag und Bekanntmachung des Hinweises auf die Patenterteilung:
**05.06.2013 Patentblatt 2013/23**

(21) Anmeldenummer: **10725198.5**

(22) Anmeldetag: **22.06.2010**

(51) Int Cl.:
***G01L 19/04*** *(2006.01)*

(86) Internationale Anmeldenummer:
**PCT/EP2010/058785**

(87) Internationale Veröffentlichungsnummer:
**WO 2011/009682 (27.01.2011 Gazette 2011/04)**

(54) **VERFAHREN ZUR DRUCKMESSUNG BEI VERÄNDERLICHEN TEMPERATUREN UND DRUCKMESSAUFNEHMER ZUR DRUCKMESSUNG BEI VERÄNDERLICHEN TEMPERATUREN**

METHOD FOR PRESSURE MEASUREMENT AT CHANGING TEMPERATURES AND PRESSURE TRANSDUCER FOR PRESSURE MEASUREMENT AT CHANGING TEMPERATURES

PROCÉDÉ DE MESURE DE PRESSION EN PRÉSENCE DE TEMPÉRATURES VARIABLES ET CAPTEUR MANOMÉTRIQUE CONÇU POUR MESURER LA PRESSION EN PRÉSENCE DE TEMPÉRATURES VARIABLES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **21.07.2009 DE 102009027899**

(43) Veröffentlichungstag der Anmeldung:
**30.05.2012 Patentblatt 2012/22**

(73) Patentinhaber: **Endress+Hauser GmbH+Co. KG**
**79689 Maulburg (DE)**

(72) Erfinder:
• **GETMAN, Igor**
**79539 Lörrach (DE)**
• **UEHLIN, Thomas**
**79650 Schopfheim (DE)**
• **WOSNITZA, Elmar**
**79104 Freiburg (DE)**
• **LIEDTKE, Manuel**
**79674 Todtnau (DE)**

(74) Vertreter: **Andres, Angelika Maria**
**Endress + Hauser (Deutschland) Holding GmbH, PatServe**
**Colmarer Strasse 6**
**79576 Weil am Rhein (DE)**

(56) Entgegenhaltungen:
**DE-A1-102006 050 451 US-A1- 2004 221 655**
**US-A1- 2005 000 290**

**EP 2 457 075 B1**

**Beschreibung**

Die vorliegende Erfindung betrifft ein Verfahren zur Druckmessung bei veränderlichen Temperaturen und einen Druckmessaufnehmer zu diesem Zweck. Es ist bekannt, dass Druckmessaufnehmer eine Querempfindlichkeit zur Temperatur aufweisen, weshalb es üblich ist, den Temperatureinfluss auf die Druckmessung zu korrigieren. Bei den etablierten Korrekturmethoden wird jedoch von einem Gleichgewichtszustand ausgegangen, der nicht geeignet ist, die Einflüsse von zeitlich veränderlichen Temperaturgradienten in angemessener Weise zu berücksichtigen.

Petit et al. offenbaren US 2005/0000290 A1 ein Verfahren, in welchem die erste Ableitung der Temperatur nach der Zeit und die zweite Ableitung der Temperatur nach der Zeit verwendet werden, um den Einfluss von Temperaturgradienten zu kompensieren. Dannhauer et al. offenbaren in DE 10 2006 050 451 A1 ein Druckmessgerät, welches anhand der charakteristischen Sprungantwort auf einen Temperatursprung die entsprechende zeitabhängige integrale Temperatur der Druckmesszelle heranzieht um den Temperatureinfluss auf den Druckmesswert zu kompensieren.

Der Ansatz, die Rate einer Temperaturänderung, bzw. die zeitliche Ableitung einer Temperatur zur Kompensation heranzuziehen ist im Ansatz richtig, denn die Geschwindigkeit einer Temperaturänderung ist ein Maß für den Temperaturgradienten, dessen Einfluss auf den Druckmesswert im Ergebnis nicht mehr mit einem Gleichgewichtsmodell kompensiert werden kann. Jedoch weist insbesondere die Arbeit von Petit et al insoweit einen Mangel auf, als sie den Druckmessaufnehmer gewissermaßen als Markov-System beschreibt, welches vollständig von den gegenwärtigen Parametern bestimmt ist. Diese Annahme mag vielleicht für spezielle Systeme zutreffend sein, sie hat aber sicher keine Allgemeingültigkeit, denn in einem realen Druckmessgerät, in dem unterschiedliche Materialien an Grenzflächen miteinander in mechanischer Wechselwirkung stehen, kann das Verhalten des Systems durch dessen Vorgeschichte mitbestimmt sein, zumal dann, wenn die Materialien zumindest anteilig nicht nur elastische, sondern auch plastische Eigenschaften aufweisen.

Es ist daher die Aufgabe der vorliegenden Erfindung, ein verbessertes Verfahren zur Kompensation von Temperaturgradienteneinflüssen auf einen Druckmessaufnehmer und einen Druckmessaufnehmer, der ein solches Verfahren implementiert, bereit zu stellen. Die Aufgabe wird erfindungsgemäß gelöst durch das Verfahren gemäß Anspruch 1 und den Drucksensor gemäß Anspruch 9

Das erfindungsgemäße Verfahren zum Kompensieren von Temperaturgradienteneinflüssen auf einen Druckmessaufnehmer umfasst:

Erfassen eines Temperatursignals $T(t)$,

Bestimmen der zeitlichen Ableitung des Temperatursignals $dT/dt$,

Korrigieren eines Druckmesswertes mit einer Korrekturfunktion, welche von der zeitlichen Ableitung abhängt, dadurch gekennzeichnet, dass in Abhängigkeit des Vorzeichens der zeitlichen Ableitung eine andere Korrekturfunktion gewählt wird bzw. andere Koeffizienten in einer Funktion gleichen Typs gewählt werden.

In einer Weiterbildung der Erfindung hat eine Korrekturfunktion $P_{corr}(T, T_0, dT/dt)$, die bei einem Vorzeichen von $dT/dt$ zur Anwendung kommt, einen größeren Effekt auf den Druckmesswert als eine Korrekturfunktion, die bei dem anderen Vorzeichen von den dT/dt zur Anwendung kommt, insbesondere gilt, dass

$$|P_{corr}(T, T_0, dT/dt)/(dT/dt)| \text{ für } dT/dt < 0$$

kleiner ist als

$$|P_{corr}(T, T_0, dT/dt)/(dT/dt)| \text{ für } dT/dt > 0.$$

In einer Weiterbildung der Erfindung ist die Korrekturfunktion proportional zur zeitlichen Ableitung der Temperatur $dT/dt$, wobei die Korrekturfunktion beispielsweise nur dann eingesetzt wird, wenn der Betrag von $dT/dt$ einen Referenzwert $R_{krit}$ übersteigt. Unterhalb dieses Grenzwertes kann auf eine Korrektur für dynamische Temperatureffekte verzichtet werden.

In einer anderen Weiterbildung der Erfindung ist die Korrekturfunktion proportional zu einer Summe, welche eine Konstante und ein Produkt aus einem Koeffizienten und der Differenz zwischen der aktuellen Temperatur und einer Starttemperatur $T_0$ enthält. Die Starttemperatur $T_0$ ist insbesondere die Temperatur, die gemessen wird, wenn in einem Korrekturzyklus erstmals der Betrag der Ableitung der Temperatur nach der Zeit den Referenzwert $R_{krit}$ übersteigt.

Die erfindungsgemäße Druckmessanordnung umfasst ein Gehäuse; eine Druckmesszelle, die in dem Gehäuse angeordnet ist; einen Temperatursensor, der in dem Gehäuse angeordnet ist, wobei die Druckmesszelle durch eine Gehäuseöffnung mit einem Mediendruck beaufschlagbar ist, wobei die Druckmesszelle einen Wandler aufweist, der einen druckabhängiges Primärsignal ausgibt, wobei der Temperatursensor eine für das Verhalten der Druckmesszelle relevante Temperatur erfasst, und ein Temperatursignal ausgibt, welches dieser Temperatur entspricht, wobei der Druckmessaufnehmer weiterhin eine Verarbeitungsschaltung aufweist, um einen Druckmesswert bereitzustellen, der von dem Primärsignal, dem Temperatursignal und der zeitlichen Ableitung des Temperatursignals abhängt, wobei das Ausmaß des Einflusses der zeitlichen Ableitung auf den Druckmesswert von den Vorzeichen der zeitlichen Ableitung abhängt. In einer Weiterbildung der Erfindung umfasst der Druckmessaufnehmer eine Druckmesszelle, die durch die Gehäuseöffnung unmittelbar mit dem Medium beaufschlagbar ist, wobei zwischen einer Gehäuseöffnung umgebenden Gehäusewand und einer Stirnfläche der Druckmesszelle ein Dichtring axial eingespannt ist.

In einer Weiterbildung der Erfindung umfasst der Dichtring ein Elastomer.

In einer Ausgestaltung dieser Weiterbildung der Erfindung wird der Dichtring radial durch einen Abschnitt der Gehäusewand abgestützt.

In einer Weiterbildung der Erfindung umfasst die Druckmesszelle eine keramische Druckmesszelle, insbesondere eine Messzelle mit einer Messmembran, welche Korund aufweist, und einen Grundkörper, welcher Korund aufweist. In einer Ausgestaltung dieser Weiterbildung der Erfindung sind die Messmembran und der Grundkörper mit einem Aktivhartlot gefügt.

Das Gehäuse des erfindungsgemäßen Druckmessaufnehmers weist in einer derzeit bevorzugten Ausgestaltung der Erfindung einen metallischen Werkstoff auf, insbesondere Stahl.

Gemäß einer Weiterbildung ist der Temperatursensor, welcher zur Kompensation der dynamischen Temperatureinflüsse herangezogen wird, im thermischen Kontakt mit der Druckmesszelle. Insbesondere kann der Temperatursensor an einer rückseitigen Oberfläche des Grundkörpers der Druckmesszelle angeordnet sein.

In einer Weiterbildung der Erfindung wird der vom Druckmessaufnehmer ausgegebene Druckmesswert in einem zweistufigen Verfahren ermittelt, wobei zunächst ein Druckmesswert unter Berücksichtigung des Primärsignals und des Temperatursignals erfolgt, und wobei die anschließende Kompensation für dynamische Temperaturschwankungen dann erfolgt, wenn der Betrag der zeitlichen Ableitung der Temperatur dT/dt einen Referenzwert $R_{krit}$ übersteigt.

Die Erfindung wird nun anhand eines in den Zeichnungen dargestellten Ausführungsbeispiels erläutert. Es zeigt:

Fig.1:    Messdaten von zyklisch auftretenden Temperatursprüngen;

Fig. 2:    den zeitlichen Verlauf eines Ausführungsbeispiels einer Druckkorrekturfunktion für positive Temperatursprünge bei unterschiedlichen Ausgangstemperaturen sowie für negative Temperatursprünge; und

Fig. 3:    ein Ausführungsbeispiel eines erfindungsgemäßen Druckmessaufnehmers.

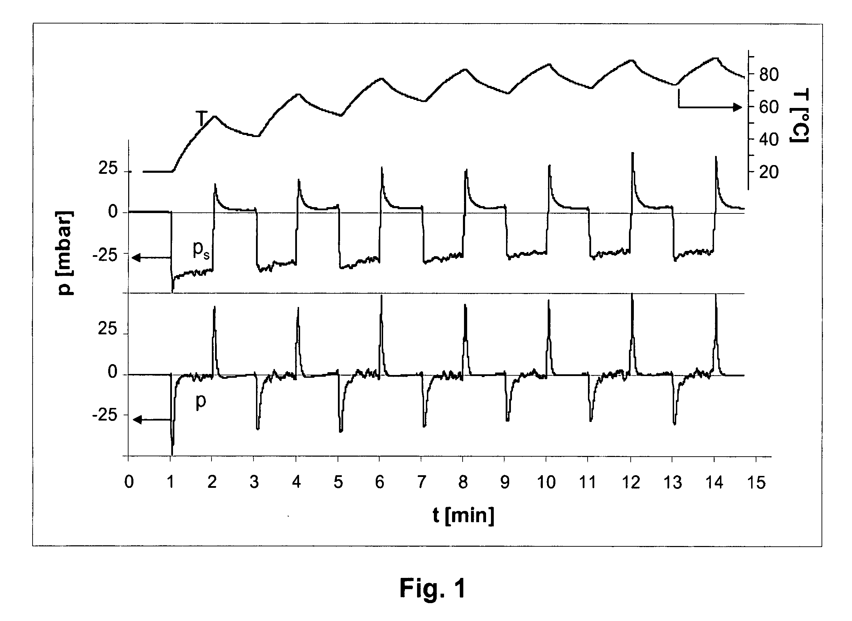

Die in Figur 1 dargestellten Messdaten zeigen Nullpunktschwankungen eines Druckmessaufnehmers, der alternierend durch Medienwechsel mit Temperatursprüngen zwischen von 4 Grad Celsius und 150 Grad Celsius beaufschlagt wurde. Hierbei zeigt die mit $T$ gekennzeichnete Kurve den Verlauf eines Temperatursignals, welches von einem Temperatursensor des erfindungsgemäßen Druckmessaufnehmers erfasst wurde, und welches den Temperatursprüngen nur mit einer charakteristischen Zeitkonstante folgen kann. Die mit $p_s$ gekennzeichnete Kurve zeigt einen Druckmesswert, welcher anhand eines Primärsignals des Wandlers einer Druckmesszelle eines erfindungsgemäßen Druckmessaufnehmers und anhand des Temperatursignals des dem Druckmessaufnehmer zugeordneten Temperatursensors ermittelt wurde. Es ist offensichtlich, dass der Nullpunkt des Drucksignals bei positiven Temperatursprüngen stark zu negativen Werten hin verschoben ist, und dass der Nullpunkt bei negativen Temperatursprüngen eine Verschiebung in den positiven Bereich aufweist. Hierbei fällt auf, dass der Drucknullpunkt bei negativen Temperatursprüngen deutlich schneller relaxiert, also sich dem wahren Wert annähert, als bei positiven Temperatursprüngen. Auf die Ursache dieses unterschiedliche Verhalten wird weiter unten eingegangen.

Die mit $p$ gekennzeichnete Kurve zeigt den Verlauf des Nullpunktsignals nach Anwendung des erfindungsgemäßen Verfahrens auf die in der Kurve $p_s$ dargestellten Daten. Hierbei wird deutlich, dass das korrigierte Drucksignal bereits nach kurzem Überschießen sehr schnell in ein Toleranzband um den Nullpunkt zurückkehrt, und zwar unabhängig davon, ob es sich um einen positiven Temperatursprung oder um einen negativen Temperatursprung handelt.

Entsprechend den Daten in Figur 1 wird der auszugebende Druckmesswert $p(S_p,T)$ gemäß der folgenden Gleichung ermittelt.

$$p(S_p,T) := p_s(S_p,T) - p_{corr}\left(T,T_0,\tfrac{dT}{dt}\right)$$

Hierbei ist $p_{corr}$ der Korrekturterm welcher zur Anwendung kommt, wenn der Betrag der zeitlichen Ableitung der Temperatur einen kritischen Referenzwert übersteigt. $p_{corr}$ genügt dabei allgemein der folgenden Form:

$$p_{corr}(T, T_0, \tfrac{dT}{dt}) := \tfrac{dT}{dt} \cdot \left[ a + b \cdot (T - T_0) \right]$$

Die Starttemperatur $T_0$ ist die Temperatur, die gemessen wird, wenn im Messbetrieb erstmals gilt $|dT/dt| > R_{krit}$, oder wenn nach Betriebsbedingungen mit langsamen Temperaturänderungen also $|dT/dt| < R_{krit}$ erstmals wieder gilt $|dT/dt| > R_{krit}$.

Bei Vorzeichenwechseln von Temperatursprüngen, ist zwar bei analytischer Darstellung zwingend eine Nullstelle für $dT/dt$ gegeben, die selbstverständlich impliziert dass es einen Punkt mit $|dT/dt| < R_{krit}$ zwischen den beiden Temperatursprüngen gibt. Jedoch kann bei einer numerischen Implementierung mit entsprechender Mittelwertbildung diese Nullstelle "verpasst" werden. Insoweit kann bei numerischer Auswertung der Rohdaten ein alternatives Kriterium für das Setzen eines neuen Wertes für $T_0$, das Auftreten eines Vorzeichenwechsels von $dT/dt$ sein bei fortgesetzter Erfüllung des Kriteriums $|dT/dt| > R_{krit}$. Die Korrektur mit $p_{corr}$ wird solange durchgeführt, bis die zeitliche Ableitung wegen der Temperatur nach der Zeit einen Betrag aufweist, der kleiner ist als ein Abschaltkriterium, wobei der Referenzwert beispielsweise ebenfalls $R_{krit}$ sein kann.

Gemäß den obigen Erwägungen und den vorliegenden Daten können bzw. müssen die Koeffizienten $a$ und $b$ für positive Temperatursprünge und negative Temperatursprünge unterschiedlich sein, wobei die konkreten Werte für jeden Druckmessaufnehmertypen individuell zu bestimmen sind. Hierbei hat sich gezeigt, dass der Koeffizient b für positive Temperatursprünge eine Abhängigkeit von der jeweiligen Starttemperatur eines Temperatursprungs aufweist, und beispielsweise durch ein Polynom beschrieben werden kann, insbesondere ein Polynom zweiter oder dritter Ordnung in $T_0$.

Koeffizienten für $dT/dt > 0$:

$$a := a_+$$

$$b(T_0) := \sum b_i \cdot T_0^i, \ i = 0, 1, \dots, N \ (\text{insbesondere } N{=}2 \text{ oder } 3)$$

Für negative Temperatursprünge erweisen sich für das Ausführungsbeispiel des erfindungsgemäßen Druckmessaufnehmers konstante Koeffizienten $a$ und $b$ als ausreichend.

Koeffizienten für $dT/dt < 0$:

$$a := a_-$$

$$b := b_-$$

Je nach den vorliegenden konstruktiven Einzelheiten können auch für negative Temperatursprünge Koeffizienten erforderlich sein, welche eine Abhängigkeit von der Starttemperatur aufweisen.

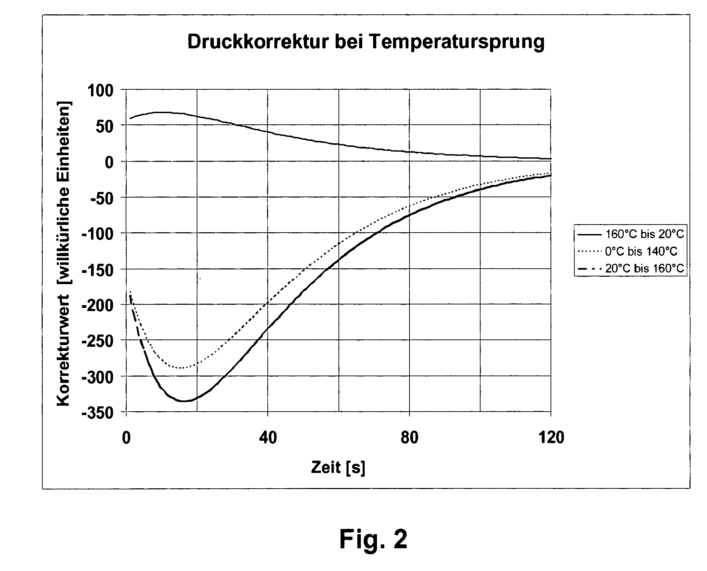

Die in Figur 2 gezeigten Kurven zeigen den zeitlichen Verlauf von Korrekturwerten, welche von einer Starttemperatur von 0 °C und 20 °C jeweils den Druckfehler bei einem positiven Temperatursprung von 140 °C kompensieren sollen. Hierbei weist die Kurve mit einer Starttemperatur von 20 °C einen größeren Betrag auf als die Kurve mit einer Starttemperatur von 0°C.

Zum Vergleich zwischen einem positiven Temperatursprung und einem negativen Temperatursprung ist noch die Korrekturfunktion für einen negativen Temperatursprung um 140°C aufgenommen, wobei diese Korrekturfunktion keine Abhängigkeit von der Ausgangstemperatur aufweist.

Es fällt auf, dass der Korrekturbedarf für negative Temperatursprünge erheblich geringer ist als für positive Temperatursprünge. So liegt beispielsweise der Wert für a für positive Temperatursprünge bei den untersuchten Sensoren zwischen 30 und 40, während $b$ für positive Temperatursprünge in Abhängigkeit der Ausgangstemperatur einen Wert zwischen -1 und -6 bei Starttemperaturen zwischen 20 Grad Celsius und 80 Grad Celsius aufweist. Für negative Temperatursprünge liegt der Wert für *a* bei den untersuchten Druckmessaufnehmer zwischen -5 und -20 und der Wert für *b* weist einen konstanten Wert zwischen 0 und 1 auf. Wie bereits zuvor erwähnt, sind diese Koeffizienten typspezifisch zu bestimmen und nicht ohne weiteres von einem Sensortyp auf ein anderen übertragbar.

Bei der Implementierung der vorliegenden Erfindung kann die zeitliche Ableitung der Temperatur selbstverständlich nicht als Differentialquotient bestimmt werden. Stattdessen wird anhand gespeicherter Temperaturmesswerte ein Differenzenquotient bestimmt, welcher als Schätzwert der zeitlichen Ableitung der Temperatur verwendet wird. Sobald der Betrag des aktuellen Differenzenquotienten den Schwellwert a kritisch übersteigt, werden die Druckmesswerte $p_s$ um den Wert $p_{corr}$ korrigiert, wobei der zugehörige Temperaturwert $T_0$ für die Berechnung des Korrekturwertes $p_{corr}$ erfasst wird. Die Korrektur wird solange angewandt, bis der Betrag des Differenzenquotienten einen Schwellwert unterschreitet, welcher das Abschaltkriterium für die Korrektur von Temperatursprüngen definiert. Dieser Grenzwert kann ebenfalls $R_{krit}$ sein.

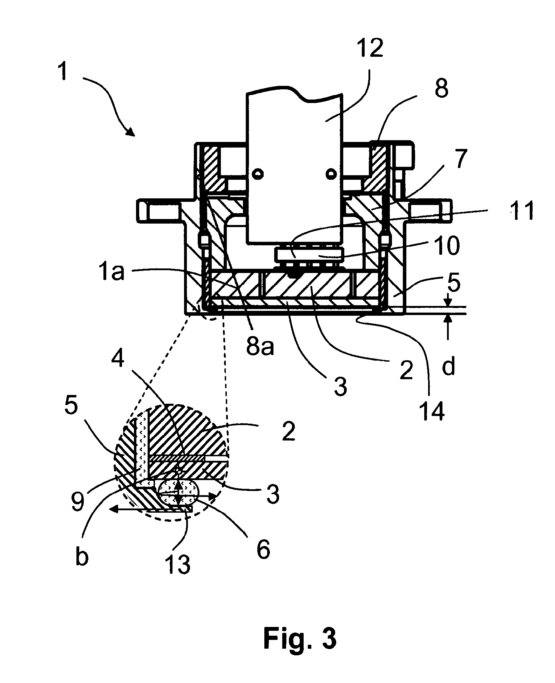

Das in Figur 3 gezeigte Ausführungsbeispiel eines erfindungsgemäßen Druckmessaufnehmers 1 umfasst eine Druckmesszelle 1 a, die einen keramischen Grundkörper 2 und eine Messmembran 3 aufweist, die mittels eines Aktivhartlots 4 gefügt sind. Die Druckmesszelle 1 a ist in einem Gehäuse 5 angeordnet, wobei das Gehäuse eine Gehäuseöffnung 14 aufweist, durch welche die Messmembran 3 der Druckmesszelle mit einem Messmedium beaufschlagbar ist. Zwischen der Messmembran 3 und einer radial einwärts gerichteten Schulter des Gehäuses 5, welche die Gehäuseöffnung begrenzt, ist eine O-Ring-Dichtung 6 axial gespannt. Um die Druckmesszelle vorgespannt in dem Gehäuse 5 zu halten, drückt zunächst ein keramischer Entkopplungsring 7 auf die Rückseite des Grundkörpers 2 der Druckmesszelle, wobei der Entkopplungsring 7 mittels eines metallischen Rings 8 in Position gehalten wird, wobei der metallische Ring 8 und das Gehäuse 5 jeweils ein Gewinde eines zueinander komplementären Gewindepaars 8a aufweisen, mit denen die axiale Position des metallischen Rings 8 festgelegt werden kann. Über die starre axiale Kopplung zwischen den Einschraubring 8 und dem Entkopplungsring 7 und der Druckmesszelle ist damit auch das Maß d definiert, welches die axiale Position der Messzelle bezüglich des Gehäuses definiert und damit den Anpressdruck der O-Ring-Dichtung bei gegebener Temperatur festlegt. Die Druckmesszelle ist weiterhin von einem L-förmigen Dichtring aus einem Elastomer umgeben, welche einen Ringspalt zwischen der Mantelfläche der Druckmesszelle und dem Gehäuse 5 abdichtet, um das Innere des Gehäuses vor Verschmutzung und Feuchte zu schützen, insbesondere bevor die Montage des O-Rings 6 erfolgt. Der L-Ring 9 ist nicht geeignet, einem Mediendruck unter Prozessbedienungen standzuhalten.

Die Druckmesszelle umfasst einen hier nicht dargestellten kapazitiven Wandler, der einander zugewandte Elektroden an der Messmembran und der Stirnseite des Grundkörpers umfasst, wobei das Ausgangsignals des kapazitiven Wandlers einer Vorverarbeitungsschaltung 10 zugeführt wird, wobei die Vorverarbeitungsschaltung 10 einen Temperatursensor 11 umfasst, dessen Messwert sowohl zur Kompensation von statischen als auch dynamischen Temperatureinflüssen herangezogen wird. Der erfindungsgemäße Druckmessaufnehmer umfasst weiterhin eine Singalverarbeitungsschaltung 12, die auf einer Leiterplatte in dem Gehäuse 5 angeordnet ist, wobei ein Eingang der Signalverarbeitungsschaltung 12 an die Vorverarbeitungsschaltung 10 angeschlossen ist und von letzterer ein digitalisiertes Temperatursignal und ein digitalisiertes Druckrohsignal empfängt. Die eigentliche Kompensation der dynamischen und statischen Temperatureinflüsse wird von der Singalverarbeitungsschaltung 12 durchgeführt.

Die Anmelderin wünscht nicht durch eine Theorie über die Ursachen des unterschiedlichen Zeitverhaltens des unkompensierten Drucksignals $p_s$ bei der Interpretation der Erfindung beschränkt zu werden, jedoch sollen die folgenden Ausführungen dazu dienen, das unterschiedliche Zeitverhalten bei positiven Temperatursprüngen und negativen Temperatursprüngen zu plausibilisieren.

Druckmessaufnehmer oder der Anschluss von Druckmessaufnehmern an eine Messstelle können Materialpaarungen von Werkstoffen unterschiedlicher Wärmeausdehnungskoeffizienten und Abweichungen von einem idealen elastischen Verhalten aufweisen. So weist beispielsweise eine Elastomerdichtung einen erheblich größeren Wärmeausdehnungskoeffizienten auf als metallische oder keramische Werkstoffe. Wenn also eine Elastomerdichtung zwischen zwei metallischen Komponenten oder einer matallischen und einer keramischen Komponente eingespannt ist, dann wird mit zunehmender Temperatur die Einspannkraft zwischen den Komponenten größer. Scherkräfte werden in einem solchen System über Reibung übertragen, wobei die Anpassung an eine temperaturabhängige Gleichgewichtslage über eine Relaxaktion in einem Stick-Slip-Mechanismus erfolgen kann. Der Verlauf des Drucksignals $p_s$ bei positiven Temperatursprüngen könnte auf einem solchen Mechanismus beruhen. Bei negativen Temperatursprüngen schrumpft ein Bauteil, welches ein Elastomer aufweist, stärker als metallische oder keramische Komponenten, weshalb die Kopplungskraft zwischen den Bauteilen abnimmt, was eine schnellere Relaxaktion gegenüber Reibungskräften ermöglicht. Dies gilt um so mehr, wenn das Elastomer bei der höheren Temperatur anteilig eine plastische Verformung erlitten hat, wodurch die Kopplungsstärke bei abnehmender Temperatur noch weiter reduziert wird.

Zur Illustration sei auf das Detail in Figur 3 verwiesen. Für die folgende Erläuterung sei die Positionsmarke b, die über dem O-Ring 6 in der Messmembran 3 eingezeichnet ist, als Ursprung eines Koordinatensystems betrachtet. Bei einer Temperaturerhöhung dehnen sich die keramischen Messmembranen 3 und der keramische Grundkörper 2 weniger stark aus, als das Gehäuse 5 welches einen metallischen Werkstoff aufweist. Im Ergebnis bewegt sich daher die radiale Schulter 13, welche die Öffnung 14 des Gehäuses 5 umgibt und welche den O-Ring 6 abstützt bezüglich des Punktes b nach links. Der O-Ring 6 weist einen noch größeren Ausdehnungskoeffizienten auf, was zu einer axialen Dehnung und einem gesteigerten Anpressdruck führt. Zudem ist die Bewegung des O-Rings durch eine radiale Schulter 13 begrenzt. Deshalb wird das zunehmende Volumen des O-Rings zu einer relativ Bewegung der Anlagefläche des O-Rings an der Messmembran nach rechts bezüglich der Positionsmarke b führen. Dies bewirkt aufgrund der Reibungskräfte O-Ring 6 und der Oberfläche der Messmembran 3 die Einleitung von Biegemomenten in die Messmembran, welche den beobachteten Messfehler bei Temperatursprüngen verursachen können.

**Patentansprüche**

1. Verfahren zum Kompensieren von Temperaturgradienteneinflüssen auf einen Druckmessaufnehmer, umfassend:

   Erfassen eines Drucksignals $S_p(t)$,
   Erfassen eines Temperatursignals $T(t)$,
   Ermitteln eines Druckmesswerts $p_s(S_p(t), T(t))$
   Bestimmen der zeitlichen Ableitung des Temperatursignals $dT/dt$,
   Korrigieren des Druckmesswertes mit einer Korrekturfunktion, welche von der zeitlichen Ableitung abhängt,
   **dadurch gekennzeichnet, dass**
   in Abhängigkeit des Vorzeichens der zeitlichen Ableitung eine andere Korrekturfunktion gewählt wird bzw. andere Koeffizienten in einer Funktion gleichen Typs gewählt werden.

2. Verfahren nach Anspruch 1, wobei eine Korrekturfunktion $p_{corr}(T, T_0, dT/dt)$, die bei einem Vorzeichen von $dT/dt$ zur Anwendung kommt, eine größeren Effekt auf den Druckmesswert als eine Korrekturfunktion, die bei dem anderen Vorzeichen von den $dT/dt$ zur Anwendung kommt.

3. Verfahren nach Anspruch 3, wobei gilt, dass

$$|P_{corr}(T, T_0, dT/dt)/(dT/dt)| \text{ für } dT/dt < 0$$

   kleiner ist als

$$|P_{corr}(T, T_0, dT/dt)/(dT/dt)| \text{ für } dT/dt > 0.$$

4. Verfahren nach einem der vorhergehenden Ansprüche, wobei die Korrekturfunktion proportional zur zeitlichen Ableitung der Temperatur $dT/dt$ ist.

5. Verfahren nach einem der vorhergehenden Ansprüche, wobei die Korrekturfunktion nur dann eingesetzt wird, wenn der Betrag von $dT/dt$ einen Referenzwert $R_{krit}$ übersteigt.

6. Verfahren nach einem der vorhergehenden Ansprüche, wobei die Korrekturfunktion proportional zu einer Summe ist, welche eine Konstante und ein Produkt aus einem Koeffizienten und der Differenz zwischen der aktuellen Temperatur und einer Starttemperatur $T_0$ zu Beginn des Temperatursprungs enthält.

7. Verfahren nach Anspruch 5 und 6, wobei die Starttemperatur $T_0$ die Temperatur ist, die gemessen wird, wenn in einem Korrekturzyklus erstmals gilt: $|dT/dt| > R_{krit}$.

8. Verfahren nach einem der vorhergehenden Ansprüche, wobei der vom Druckmessaufnehmer ausgegebene Druckmesswert in einem zweistufigen Verfahren ermittelt wird, wobei zunächst ein Druckmesswert unter Berücksichtigung des Primärsignals und des Temperatursignals erfolgt, und wobei die anschließende Kompensation für dynamische Temperaturschwankungen dann erfolgt, wenn der Betrag der zeitlichen Ableitung der Temperatur $dT/dt$ einen Referenzwert $R_{krit}$ übersteigt.

9. Druckmessaufnehmer (1), umfassend:

ein Gehäuse (5) mit einer Gehäuseöffnung (14);
eine Druckmesszelle (1a) die in dem Gehäuse angeordnet ist;
einen Temperatursensor (11), der in dem Gehäuse angeordnet ist,
wobei die Druckmesszelle (1a) durch die Gehäuseöffnung (14) mit einem Mediendruck beaufschlagbar ist,
wobei die Druckmesszelle (1a) einen Wandler zum Ausgeben eines druckabhängigen Primärsignals aufweist,
wobei der Temperatursensor (11) dazu vorgesehen ist, eine für das Verhalten der Druckmesszelle relevante Temperatur zu erfassen, und ein Temperatursignal auszugeben, welches dieser Temperatur entspricht,
wobei der Druckmessaufnehmer weiterhin eine Verarbeitungsschaltung (12) aufweist, um einen Druckmesswert bereitzustellen, der von dem Primärsignal, dem Temperatursignal und der zeitlichen Ableitung des Temperatursignals abhängt,
**dadurch gekennzeichnet,**
**dass** in Abhängigkeit des Vorzeichens der zeitlichen Ableitung eine andere Korrekturfunktion bzw. andere Koeffizienten in einer Funktion gleichen Typs gewählt wird.
**dass** die Verarbeitungsschaltung so ausgebildet ist, dass die Vorzeichenabhängigkeit des Ausmaßes des Einflusses der zeitlichen Ableitung des Temperatursignals auf den Druckmesswert dadurch berücksichtigt wird,

10. Druckmessaufnehmer nach Anspruch 9, wobei die Druckmesszelle durch die Gehäuseöffnung (14) unmittelbar mit dem Medium beaufschlagbar ist, wobei zwischen einer die Gehäuseöffnung umgebenden radial einwärts gerichteten Schulter (13) und einer Stirnfläche der Druckmesszelle (1a) ein Dichtring (6) axial eingespannt ist.

11. Druckmessaufnehmer nach Anspruch 10, wobei der Dichtring durch einen Abschnitt einer Wand des Gehäuses radial abgestützt wird.

12. Druckmessaufnehmer nach einem der Ansprüche 9 bis 11, wobei die Druckmesszelle eine keramische Druckmesszelle, mit einer Messmembran umfasst, welche Korund aufweist, und einen Grundkörper, welcher Korund aufweist.

13. Druckmessaufnehmer nach einem der Ansprüche 9 bis 12, wobei das Gehäuse einen metallischen Werkstoff aufweist, insbesondere Stahl.

14. Druckmessaufnehmer nach einem der Ansprüche 9 bis 13, wobei der Temperatursensor, welcher zur Kompensation der dynamischen Temperatureinflüsse herangezogen wird, in thermischen Kontakt mit der Druckmesszelle steht.

15. Druckmessaufnehmer nach einem der Ansprüche 9 bis 14, wobei der Temperatursensor, an einer rückseitigen Oberfläche oder nahe der rückseitigen Oberfläche des Grundkörpers der Druckmesszelle angeordnet ist.

**Claims**

1. Procedure for compensating the effects of temperature gradients on a pressure sensor, comprising:

   The measurement of a pressure signal Sp(t),
   The measurement of a temperature signal T(t),
   The determination of a pressure measured value $p_s(S_{p(t)}, T(t))$,
   The determination of the derivative with respect to time (time derivative) of the temperature signal dT/dt,
   The correction of the pressure measured value with a correction function which depends on the time derivative,
   **characterized in that**
   depending on the sign of the time derivative, another correction function is selected or other coefficients in a function of the same time are selected.

2. Procedure as claimed in Claim 1, wherein a correction function $p_{corr}(T, T_0, dT/dt)$, which is applied with a sign of dT/dt, has a greater effect on the pressure measured value than a correction function that is applied with the other sign of dT/dt.

3. Procedure as claimed in Claim 3, wherein

$$\left| P_{corr}(T, T_0, dT/dt)/(dT/dt) \right| \text{ for } dT/dt < 0$$

is smaller than

$$\left| P_{corr}(T, T_0, dT/dt)/(dT/dt) \right| \text{ for } dT/dt > 0$$

4. Procedure as claimed in one of the previous claims, wherein the correction function is proportional to the time derivative of the temperature dT/dt.

5. Procedure as claimed in one of the previous claims, wherein the correction function is then only used if the amount for dT/dt exceeds a reference value $R_{krit}$.

6. Procedure as claimed in one of the previous claims, wherein the correction function is proportional to a sum, which contains a constant and a product of a coefficient and the difference between the current temperature and an initial temperature $T_0$ at the start of the temperature increase.

7. Procedure as claimed in Claims 5 and 6, wherein the initial temperature $T_0$ is the temperature that is measured when the following applies for the first time in a correction cycle: $(dT/dt) > R_{krit}$.

8. Procedure as claimed in one of the previous claims, wherein the pressure measured value output by the pressure sensor is determined in a two-step process, wherein in the first step a pressure measured value occurs taking the primary signal and the temperature signal into account, and wherein the subsequent compensation for dynamic temperature fluctuations then takes place when the value of the time derivative of the temperature dT/dt exceeds a reference value $R_{krit}$.

9. Pressure sensor (1) comprising:

   a housing (5) with a housing opening (14),
   a pressure measuring cell (1a), which is arranged in the housing,
   a temperature sensor (11), which is arranged in the housing,
   wherein the pressure measuring cell (1a) can be subject to a medium pressure via the housing opening (14),
   wherein the pressure measuring cell (1a) has a converter to output a pressure-dependent primary signal,
   wherein the temperature sensor (11) is provided to measure a temperature that is relevant for the behavior of the pressure measuring cell and to output a temperature signal which corresponds to this temperature,
   wherein the pressure sensor further comprises a processing circuit (12) designed to provide a pressure measured value which is dependent on the primary signal, the temperature signal and the time derivative of the temperature signal,
   **characterized in that**
   the processing circuit is designed in such a way that the sign dependency of the extent of the effect of the time derivative of the temperature signal on the pressure measured value is taken into consideration **in that** - depending on the sign of the time derivative - another correction function or another coefficient in a function of the same type is selected.

10. Pressure sensor as claimed in Claim 9, wherein the pressure measuring cell can be directly subject to the medium via the housing opening (14), wherein a sealing ring (6) is axially clamped between a shoulder (13), which surrounds the housing opening and is directed radially inwards, and a front face of the pressure measuring cell (1a).

11. Pressure sensor as claimed in Claim 10, wherein the sealing ring is radially supported by a section of a wall of the housing.

12. Pressure sensor as claimed in one of the Claims 9 to 11, wherein the pressure measuring cell has a ceramic pressure measuring cell with a measuring membrane, which features corundum, and a meter body, which features corundum.

13. Pressure sensor as claimed in one of the Claims 9 to 12, wherein the housing comprises a metal material, notably steel.

14. Pressure sensor as claimed in one of the Claims 9 to 13, wherein the temperature sensor which is used to compensate the dynamic temperature effects, is in thermal contact with the pressure measuring cell.

**15.** Pressure sensor as claimed in one of the Claims 9 to 14, wherein the temperature sensor is arranged on a rear surface or near the rear surface of the meter body of the pressure measuring cell.

**Revendications**

**1.** Procédé destiné à la compensation d'influences de gradients de température sur un capteur de pression, comprenant :

       La mesure d'un signal de pression $S_p(t)$,
       La mesure d'un signal de température $T(t)$,
       La détermination d'une valeur de pression $p_s(S_{p(t)}, T(t))$,
       La détermination de la dérivée temporelle du signal de température $dT/dt$,
       La correction de la valeur de mesure de pression avec une fonction de correction,
       laquelle dépend de la dérivée temporelle,
       **caractérisé en ce**
       **que**, en fonction du signe de la dérivée temporelle, une autre fonction de correction est sélectionnée ou d'autres coefficients sont sélectionnés dans une fonction de même type.

**2.** Procédé selon la revendication 1, pour lequel une fonction de correction $p_{corr}(T, T_0, dT/dt)$, laquelle est appliquée avec un signe de $dT/dt$, a un effet plus important sur la valeur de mesure de pression qu'une fonction de correction, laquelle est appliquée avec l'autre signe de $dT/dt$.

**3.** Procédé selon la revendication **3**, pour lequel

$$\left| P_{corr}(T, T_0, dT/dt)/(dT/dt) \right| \text{ pour } dT/dt < 0$$

est inférieur à

$$\left| P_{corr}(T, T_0, dT/dt)/(dT/dt) \right| \text{ pour } dT/dt > 0$$

**4.** Procédé selon l'une des revendications précédentes, pour lequel la fonction de correction est proportionnelle à la dérivée temporelle de la température $dT/dt$.

**5.** Procédé selon l'une des revendications précédentes, pour lequel la fonction de correction n'est utilisée que si le montant de $dT/dt$ dépasse une valeur de référence $R_{krit}$.

**6.** Procédé selon l'une des revendications précédentes, pour lequel la fonction de correction est proportionnelle à une somme, laquelle contient une constante et un produit composé d'un coefficient et de la différence entre la température actuelle et une température de départ $T_0$ présente au début du saut de température.

**7.** Procédé selon les revendications 5 et 6, pour lequel la température de départ $T_0$ est la température, qui est mesurée lorsque, dans un cycle de correction, la relation $|(dT/dt)| > R_{krit}$ est pour la première fois valable.

**8.** Procédé selon l'une des revendications précédentes, pour lequel la valeur de mesure de pression délivrée par le capteur de pression est déterminée dans le cadre d'un procédé à deux étapes, une valeur de mesure de pression intervenant dans un premier temps en tenant compte du signal primaire et du signal de température, et la compensation consécutive pour les fluctuations de température dynamiques intervenant lorsque le montant de la dérivée temporelle $dT/dt$ dépasse une valeur de référence $R_{krit}$.

**9.** Capteur de pression (1) comprenant :

       un boîtier (5) doté d'une ouverture de boîtier (14),
       une cellule de mesure de pression (1a), laquelle est disposée dans le boîtier,

un capteur de température (11), lequel est disposé dans le boîtier,

la cellule de mesure de pression (1a) pouvant être soumise à une pression de produit à travers l'ouverture de boîtier (14),

la cellule de mesure de pression (1a) comportant un convertisseur destiné à délivrer un signal primaire dépendant de la pression.

le capteur de température (11) étant prévu dans le but de relever la température importante pour le comportement de la cellule de mesure de pression, et délivrer un signal de température, qui correspond à cette température, le capteur de pression comportant en outre un circuit de traitement (12) destiné à mettre à disposition une valeur de mesure de pression, qui dépend du signal primaire, du signal de température et de la dérivée temporelle du signal de température,

**caractérisé en ce**

**que** le circuit de traitement est conçu de telle manière qu'il est tenu compte de la dépendance du signe de l'ampleur de l'influence de la dérivée temporelle du signal de température sur la valeur de mesure de pression, **que**, en fonction du signe de la dérivée temporelle, une autre fonction de correction ou d'autres coefficients sont sélectionnés dans une fonction de même type.

10. Capteur de pression selon la revendication 9, pour lequel la cellule de mesure de pression peut être alimentée avec le produit à travers l'ouverture de boîtier (14), une bague d'étanchéité (6) étant insérée entre un épaulement (13) dirigé radialement vers l'intérieur, entourant l'ouverture de boîtier, et une face frontale de la cellule de mesure de pression (1a).

11. Capteur de pression selon la revendication 10, pour lequel la bague d'étanchéité est supportée radialement par une section d'une paroi du boîtier.

12. Capteur de pression selon l'une des revendications 9 à 11, pour lequel la cellule de mesure de pression comprend une cellule de mesure de pression en céramique, dotée d'une membrane de mesure, laquelle est constituée de corindon, et d'un corps de base, lequel est constitué de corindon.

13. Capteur de pression selon l'une des revendications 9 à 12, pour lequel le boîtier est constitué d'un matériau métallique, notamment de l'acier.

14. Capteur de pression selon l'une des revendications 9 à 13, pour lequel le capteur de température, auquel on a recours pour la compensation des influences de température dynamiques, est en contact thermique avec la cellule de mesure de pression.

15. Capteur de pression selon l'une des revendications 9 à 14, pour lequel le capteur de température est disposé sur une surface arrière ou près de la surface arrière du corps de base de la cellule de mesure de pression.

**Fig. 1**

**Druckkorrektur bei Temperatursprung**

Fig. 2

**Fig. 3**

EP 2 457 075 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050000290 A1

- DE 102006050451 A1